# EUROPEAN PATENT APPLICATION

(11) **EP 3 315 694 A1**
(43) Date of publication of application: **02.05.2018**
(21) Application number: 17193635.4
(22) Date of filing: 28.09.2017
(51) Int. Cl.: E04H 12/08, E04H 12/12, F03D 13/20

(54) **TOWER STRUCTURE**

(30) Priority: 27.10.2016 DE 102016221242
(71) Applicant: Siemens Aktiengesellschaft, 80333 München (DE)
(72) Inventor: Rasmussen, Anders Nygaard, 8700 Horsens (DK); Shaik, Mujahid, Shanghai, 200120 (CN)

(57) **Abstract**

The invention describes a tower structure (1) comprising a supporting tower portion (10); and a main tower portion (20) arranged over the supporting tower portion (10); characterized in that the supporting tower portion (10) has the form of a right cylinder and comprises at least one supporting tower section (11) assembled from a plurality of cylinder arc segments (110) arranged to meet at their vertical sides (112). The invention further describes a method of constructing such a tower structure (1).

## Description

The invention describes a tower structure, and a method of constructing such a wind turbine tower.

The height of a tower structure such as a wind turbine tower can easily exceed 100 m, for example in the case of wind turbines with high power output and correspondingly long rotor blades. Such a tower structure is generally wider at the base and narrower at the top, and has the form of a truncated cone. It is possible to construct such towers using a suitable material such as concrete or steel. A tall tower structure can be assembled from pre-fabricated sections that are stacked on top of each other on site. Each section is generally constructed to have an inner and/or an outer flange around each of its upper and lower perimeters, so that adjacent sections can be bolted together.

Tower height is closely related to tower diameter, in the sense that a taller tower structure generally has a wider diameter at its base. The tower diameter of a wind turbine tower decreases with increasing tower height, reducing to the width of a yaw ring installed at the top of the tower. With increasing tower heights, problems arise with the transport of the correspondingly wide tower sections, since the existing transport infrastructure can place limitations on the size of tower sections that can transported from a manufacturing site to an installation site. For example, the maximum width and/or height of a tower section may be limited by the tunnel height and/or road width etc. along the transportation route. A maximum height of around 4.5 m (motorway overpass or vehicular bridge in Germany) or only 3.96 m (motorway overpass or vehicular bridge in the USA) is a limit commonly placed on transport vehicles. Lower limits may also apply, for example in vehicular tunnels or under railway bridges. Such limitations place constraints on the maximum height of a tower section (if it is to be transported upright) or the maximum diameter of a tower section (if it is to be transported horizontally). The maximum dimension of a tower part to be transported is further reduced by the height of the transportation vehicle using to move it to the installation site, for example the load-bed of even a very low trailer dolly can be 0.35 m above ground.

In one approach to circumventing these infrastructure constraints, a tower could be assembled on site from several pieces or segments that are shaped to give an overall truncated conical shape when connected together. For example, it is known to construct a steel tower from many flat plate segments that are bolted or riveted to their adjacent sections. Aside from the fact that such segments need to be precisely machined, for example so that matching through-openings align correctly, the assembly of such segments is time-consuming. Such a tower is therefore relatively expensive. Furthermore, the large number of individual parts and the correspondingly poor load transfer means that the achievable height of such a tower is relatively short. Although this type of tower structure is not affected by the kind of infrastructure constraints described above, it is completely unsuitable for a tall tower structure that will be subject to high loading.

To achieve the necessary structural stability for a tall tower structure, the tower could be constructed from relatively short conical sections that are stacked on top of each other to the desired height, for example 10 tapering sections stacked to total height of 120 m. In a known approach, each section can be formed from two halves that are bolted together along vertical ribs at their outer edges. In this approach, each tapering section must be manufactured to include these vertical ribs, and the halves must be connected together using many fasteners in a time-consuming and therefore also costly procedure. Furthermore, for a very tall tower of the type required for a large wind turbine with a power output in the region of 6 MW, for example, the section diameters will be wide - in the range of several metres - so that a half section may be too large for transportation using the existing infrastructure.

It is therefore an object of the invention to provide an alternative way of overcoming infrastructure constraints in order to construct such a tall tower.

This object is achieved by the tower structure of claim 1; and by the method of claim 12 of manufacturing such a tower structure.

According to the invention, the tower structure - preferably a wind turbine tower - comprises a supporting tower portion and a main tower portion arranged over the supporting tower portion. The supporting tower portion has the form of a right cylinder (preferably hollow with a suitable wall thickness) and comprises at least one supporting tower section assembled from a plurality of cylinder arc segments arranged to meet at their vertical sides. A suitable form for the supporting tower portion is that of a right circular cylinder, i.e. a cylinder with circular cross-section and constant diameter over its entire height. Without restricting the invention in any way, it may be assumed that the supporting tower portion is "tubular" in form, having the shape of a right circular cylinder. However, it shall be understood that any other form is possible - for example the supporting tower portion might be uniformly elliptical in cross-section, or might be uniformly square, rectangular or otherwise polygonal in cross-section. In any case, the "right cylindrical" form of the supporting tower portion is to be understood to mean that the supporting tower portion has a uniform cross-section over its height, regardless of the cross-sectional shape.

In the context of the invention, the form of a cylinder arc segment may be visualised as the form that is obtained from the intersection of such a right cylinder with one or more vertical planes. Preferably, but not necessarily, such a vertical plane contains the vertical central axis of the right cylinder. Without restricting the invention in any way, and to simplify the following description, a cylinder arc segment may be assumed to be a segment of a right circular cylinder.

The inventive tower structure comprises two distinct tower portions, namely a main tower portion resting on a supporting tower portion. The main tower portion rests on top of the supporting tower portion and can have the usual tapered form, with a relatively small diameter at the top of the tower structure for installation of a yaw ring. An advantage of the inventive tower structure is that the lower portion of the tower - the supporting tower portion - can comprise a significant fraction of the overall tower height, while comprising elements that can easily be transported using an available transport infrastructure. Furthermore, the right circular cylindrical shape of the supporting tower portion gives it a high degree of structural stability.

According to the invention, the method of constructing a tower structure comprises the steps of providing a supporting tower portion in the form of a right circular cylinder by assembling at least one supporting tower section from a plurality of cylinder arc segments arranged to meet at their vertical sides; and assembling a main tower portion over the supporting tower portion.

Particularly advantageous embodiments and features of the invention are given by the dependent claims, as revealed in the following description. Features of different claim categories may be combined as appropriate to give further embodiments not described herein.

In the following, it may be assumed that the tower structure is realized as a wind turbine tower with a height of at least 100 m. Preferably, the diameter of the supporting tower portion comprises at least 4.0 m, preferably at least 6.0 m, most preferably at least 8.0 m. Preferably, the height of the supporting tower portion of such a wind turbine tower comprises at least 4% of the total tower height. It may be assumed that the sections of the tower are connected to each other in some suitable manner as will be known to the skilled person, for example by providing inner and/or outer flanges at the top and bottom of each section, so that successive sections can be bolted together.

A "section" as used in the expression "supporting tower section" is to be understood as a "horizontal slice" of the tower. The supporting tower portion can comprise several such sections or slices, stacked on top of each other to obtain a right cylinder - preferably a right circular cylinder - with the desired height. In a particularly preferred embodiment of the invention, the ratio H:D of the height of a supporting tower section to the diameter of that supporting tower section satisfies the relationship 0.5 ≤ H/D ≤ 1.0.

In such an embodiment, the height of a tower slice can be as large as the diameter of the supporting tower portion, and is at least as large as the radius of the supporting tower portion. If the supporting tower portion has a diameter of 8 m, for example, the height of a "slice" is at least 4 m and can be up to 8 m. A right cylinder with a diameter in the region of 8 m would be impossible to transport using an existing transportation infrastructure. However, by dividing such a tower section into several cylinder arc segments, transportation is made significantly simpler. For example, a cylinder arc segment corresponding to a quarter of right cylinder with an 8 m diameter has a height of only about 1.2 m when transported horizontally.

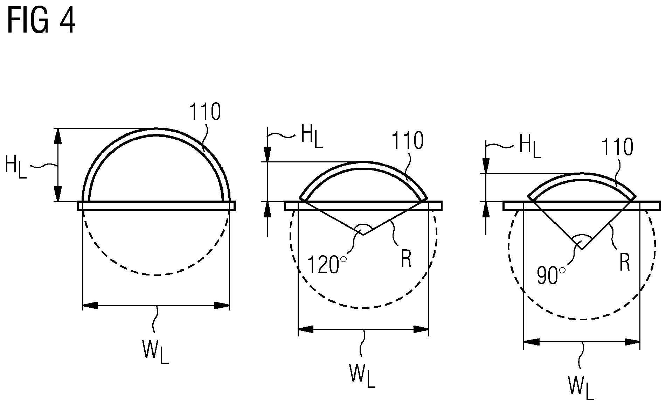

The number of cylinder arc segments (or simply "arc segments" in the following) can be chosen on the basis of the existing or applicable infrastructure constraints. For example, interpretation of the infrastructure constraints may set an upper limit W_{L} on the horizontal width of a load that can be transported (the term "horizontal width" is to be understood as the width of the load or arc segment when laid horizontally on the load bed of a transportation vehicle). In the case of a supporting tower section made of two equal arc segments, the horizontal width W_{L} corresponds essentially to the diameter of the supporting tower section; in the case of a supporting tower section made of three equal arc segments, the diameter corresponds essentially to 1.16 times W_{L}; in the case of a supporting tower section made of four arc segments, the diameter corresponds essentially to 1.414 times W_{L}, etc. This will explained with the aid of Fig. 4 below.

In a preferred embodiment of the invention, the adjacent arc segments of a supporting tower section are not joined in any way, i.e. there is no mechanical connection formed between them. Instead, the opposing vertical side faces of adjacent segments can lie against each other or may even be separated by a gap. A "vertical side face" of an arc segment may be assumed to have the shape of a narrow rectangle whose height is the height of the tower section, and whose width corresponds to the wall thickness of that tower section. The arc segments of a supporting tower section can have been manufactured with sufficient accuracy so that the vertical side faces make contact over their entire length, for example. These friction contacts can provide the necessary structural stability when that supporting tower section is in place. For example, a supporting tower section can be placed between two other supporting tower sections and fastened to these, for example by means of circular flanges at its upper and lower circular perimeters. Similarly, the uppermost supporting tower section can be installed on top of another supporting tower section and underneath the main tower portion. Equally, the lowermost supporting tower section can be secured to a concrete plinth or foundation in such a manner. In such an assembly, such interior and/or exterior circular flange connections can be sufficient to hold together the parts of the supporting tower portion.

Alternatively, in a further preferred embodiment of the invention, if a gap between adjacent arc segments is too large to achieve a friction contact, those arc segments can be joined over at most 50%, more preferably at most 10%, of the height of that supporting tower section. For example, a connector can be used to physically connect the adjacent arc segments. A connector can be a plate, a band, or similar, preferably made of a structurally strong material such as steel. A connecting plate or band preferably extends laterally from either side of the gap between the adjacent arc segments and can be bolted or riveted in place using a suitable number of appropriate fasteners (bolts, rivets, studs etc.) extending into or through the arc segment. Other types of connector are conceivable. For example, the vertical sides of adjacent arc segments may be provided with flanges that can be connected to secure the arc segments together. Here also, a vertical flange connection can extend over at most 50%, more preferably at most 10%, of the height of an arc segment. Alternatively, a horizontal band can be wrapped around a supporting tower section to encircle it, and tightened to apply an even pressure at all points around that supporting tower section.

Any gaps remaining between adjacent arc segments can be closed, for example by applying a filler material to fill any spaces remaining between adjacent segments of a supporting tower section. This can serve to prevent water and airborne particles from entering the tower. Preferably, the filler material can comprise a flexible grout or cement material and/or a sealing material such as rubber, plastic, foam, silicone, etc.

A supporting tower portion can comprise any number of supporting tower sections. For example, the supporting tower portion can be assembled as a stack of two or more supporting tower sections. In such an embodiment, the arc segments of the supporting tower sections are assembled in a staggered fashion, so that a junction between adjacent arc segments of one section is laterally offset from a junction between adjacent arc segments of an upper or lower supporting tower section.

As indicated above, the main tower portion has a tapered form, becoming narrower with increasing height. The base of the main tower portion is its widest part. In a preferred embodiment of the invention, the tower structure comprises an annular adapter portion arranged between the supporting tower portion and the main tower portion, and wherein a lower diameter of the adapter portion corresponds to the diameter of the supporting tower portion and an upper diameter of the adapter portion corresponds to a lower diameter of the main tower portion. In this way, it is possible to construct a main tower portion with a relatively small lower diameter, so that the main tower portion can be designed and constructed to comply with the relevant infrastructure constraints, thereby simplifying the transportation issues. The annular adapter portion can be a one-piece structure, or can be assembled from two or more segments. Of course, if the supporting tower portion has an elliptical or polygonal cross-section, the lower circumference of the adapter portion can also have this shape also, changing gradually to the circular shape of the main tower portion.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows an embodiment of the inventive tower structure;
Fig. 2 shows a supporting tower section of the tower structure of Fig. 1;
Fig. 3 shows a further embodiment of the inventive tower structure;
Fig. 4 illustrates a relationship between an arc segment of a supporting tower section and an infrastructure constraint;
Fig. 5 shows a further embodiment of the inventive tower structure.

In the diagrams, like numbers refer to like objects throughout. Objects in the diagrams are not necessarily drawn to scale.

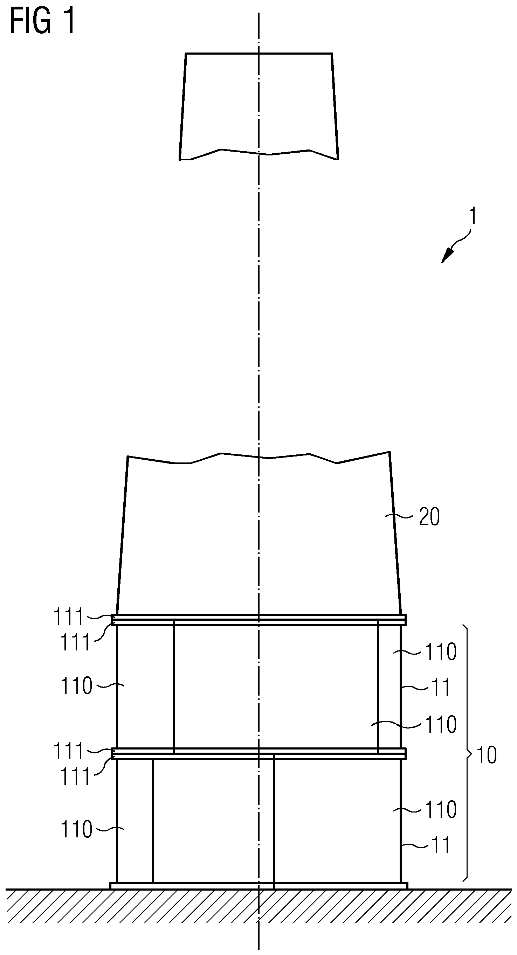

Fig. 1 shows an embodiment of the inventive tower structure 1, with a main tower portion 20 assembled on top of a supporting tower portion 10. The main tower portion 20 rests on the supporting tower portion 10, and can be realised as a single part or can comprise several truncated conical sections, as will be known to the skilled person.

Here, the supporting tower portion 10 comprises two segmented tower sections 11 made of a suitable material such as structural steel, reinforced concrete, etc. Each segmented tower section 11 has several segments 110 (for example two, three or four segments) which when assembled have the form of a right circular cylinder. In this embodiment, the diameter of a tower section 11 is about twice its height. Of course, the diameter of a segmented tower section 11 could approach the height of that segmented tower section 11. Each segmented tower section 11 can be connected to a lower part and to an upper part by means of a horizontal flange connection, as indicated in the diagram. The first (lowest) segmented tower section 11 is secured to a concrete plinth 30 or foundation 30 by means of bolts extending upward from the plinth 30; and also to the second tower section 11. In this embodiment, the connection between first and second segmented tower sections 11 is also made using flanges that extend around the upper and lower edges of each segment 110. The lower edge of the main tower portion is also secured to the second tower section 11 by means of a flange.

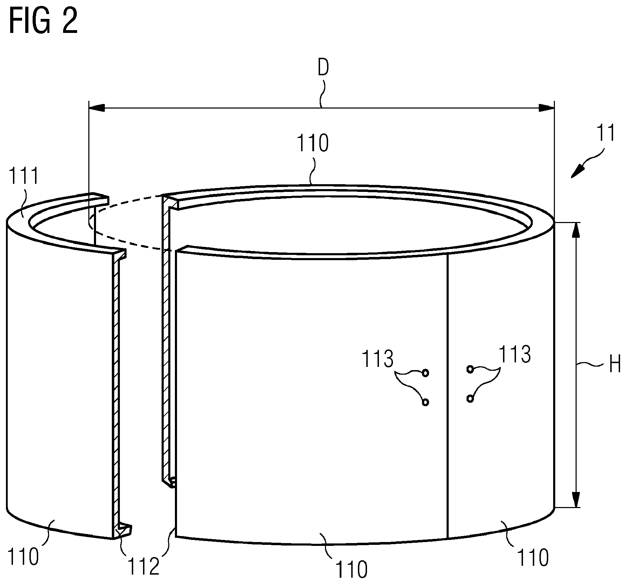

Fig. 2 shows an exemplary segmented tower section 11. Here, the tower section 11 comprises four segments 110 of essentially equal size. Together, these segments 110 combine to give a right circular cylinder shape with a diameter D and height H. The height-to-diameter ratio H:D satisfies the relationship 0.5 ≤ H/D ≤ 1.0. The diagram also shows an interior flange 111 at the lower edge of each segment 110. The flange 111 can be used to secure that segment 110 to a segment of a lower segmented tower section or to a foundation structure. Similarly, an interior flange 111 at the upper edge of each segment 110 can be used to secure that segment 110 to a segment of an upper segmented tower section or to the lower edge of the main tower portion.

Because of the favourable height-to-diameter ratio H:D of the segmented tower sections 11, there is no need to join the adjacent segments 110 of a tower section 11. It may be sufficient to manufacture the segments 110 so that their vertical edges 112 abut, for example. The ensuing friction contact between the opposing vertical faces 112 may be sufficient to provide the tower section 11 with the necessary structural stability.

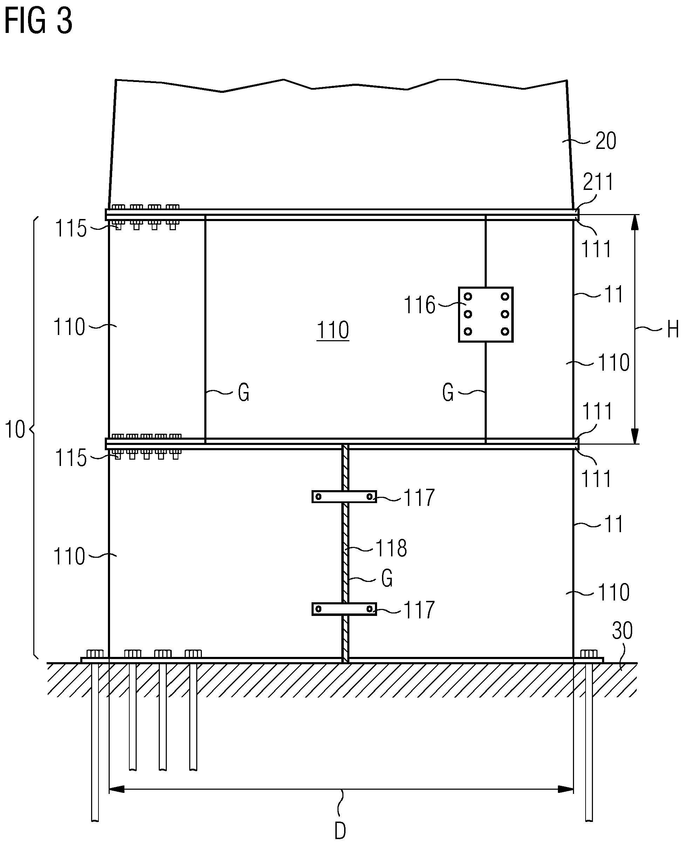

If required, adjacent segments 110 of a tower section 11 can be joined in a number of ways. For example, a grout or other filler could be used to fill any gap remaining between adjacent segments 110. Alternatively, a mechanical connection can be made. The diagram indicates a number of through-holes 113 formed close to the vertical sides of two adjacent segments 110. A plate can later be secured to the inside and/or outside of the segments 110 using bolts, rivets, studs, etc., as will be explained with the aid of Fig. 3.

Fig. 3 shows another embodiment of the inventive tower structure 1, with a main tower portion 20 assembled on top of a supporting tower portion 10. The supporting tower portion 10 comprises a lower segmented tower section 11 and an upper segmented tower section 11. Here, the lower segmented tower section 11 is bolted to a concrete plinth 30 using an annular arrangement of bolts 31 (only a few are shown in the diagram) embedded in the concrete to protrude through the upper surface of the concrete plinth 30.

The lower segmented tower section 11 is also bolted to the upper segmented tower section 11 using an annular arrangement of fasteners 115 (only a few are shown in the diagram) inserted into exterior flanges 111 of the segments 110.

The main tower portion 10 is also bolted to the upper segmented tower section 11 using an annular arrangement of fasteners 115 (only a few are shown in the diagram) inserted through bushings of the exterior flanges 111 of the segments 110 and an exterior flange 211 of the main tower portion 20.

This diagram also shows various connection possibilities. At the left-hand side of the upper segmented tower section 11, two adjacent arc segments 110 are not mechanically connected at all. The arc segments 110 may have been manufactured so that the opposing faces of the vertical edges of the adjacent arc segments 110 make good surface contact, so that the connection between these adjacent arc segments 110 is effectively a friction contact along a narrow or negligible gap G. At the right-hand side of the upper segmented tower section 11, two adjacent arc segments 110 are mechanically connected by means of a connecting plate 116 that is secured on either side of the vertical gap G. In the lower segmented tower section 11, two adjacent arc segments 110 are mechanically connected by means of connecting bands 117 that are secured on either side of the vertical gap G. In this case, the gap G is relatively open, and has been closed by filling it with a suitable filler material such as grout.

Although the diagram only shows two segmented tower sections 11 in the supporting tower portion 10, any number of segmented tower sections 11 may be used. When two or more segmented tower sections 11 are assembled in a stack as shown in Fig. 1 and Fig. 3, the junctions between adjacent arc segments can be staggered as shown in order to achieve a favourable degree of structural stability.

Fig. 4 shows how the number of arc segments of a tower portion may be determined on the basis of an infrastructure constraint. Here, a constraint can be the maximum width W_{L} of a load and/or the maximum height H_{L} of a load. In each diagram, the outline of a possible supporting tower section 11 with diameter D is indicated by the dotted line. On the left-hand side, the maximum load width W_{L} and/or the maximum load height H_{L} can determine the maximum possible diameter of a supporting tower section that is to be constructed from only two arc segments. In the middle part of the diagram, the maximum possible diameter D of a supporting tower section that is to be constructed from three arc segments will be 1.16 times the maximum load width W_{L}, since W_{L} = 1.73R in this case, where R is the radius of the supporting tower section. A horizontally loaded arc segment can be transported along any route with a permissible load height H_{L} that corresponds to half of the radius of the supporting tower section. On the right-hand side, the maximum possible diameter D of a supporting tower section that is to be constructed from four arc segments will be 1.4 times the maximum load width W_{L}, since W_{L} = 1.414R in this case. A horizontally loaded arc segment can be transported along any route with a permissible load height H_{L} that corresponds to about one third of the radius of the supporting tower section.

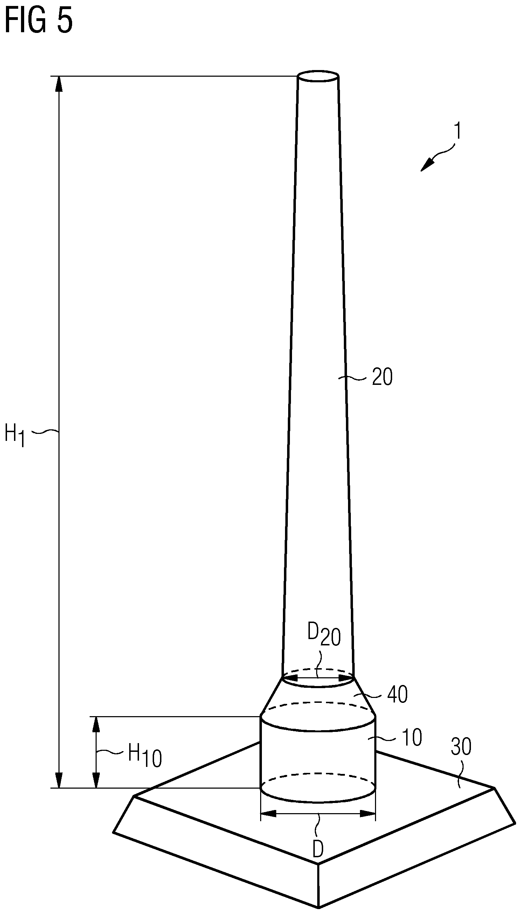

Fig. 5 shows a further embodiment of the inventive tower structure 1. Here, the supporting tower portion 10 is mounted on a plinth or foundation 30. An adapter portion 40 is installed on top of the supporting tower portion 10. The main tower portion 20 is installed on top of the adapter portion 40. The adapter portion 40 is in the shape of a truncated cone and has a lower diameter that corresponds to the diameter D of the supporting tower portion 10, and an upper diameter that corresponds to the widest diameter D₂₀ of the main tower portion 20. The overall tower height H₁ can exceed 100 m. The height H₁₀ of the supporting tower portion 10 in this exemplary embodiment comprises at least 4.5% of the total tower height H₁. This straight-walled cylindrical section 10 can be constructed and transported in compliance with European infrastructure constraints, and allows the main tower portion also to be constructed and transported in compliance with European infrastructure constraints.

Although the present invention has been disclosed in the form of preferred embodiments and variations thereon, it will be understood that numerous additional modifications and variations could be made thereto without departing from the scope of the invention. For example, instead of assembling the supporting tower portion from equally shaped arc segments and using the same connectors to join them, it would be possible to use arc segments that have different shapes and different connectors.

For the sake of clarity, it is to be understood that the use of "a" or "an" throughout this application does not exclude a plurality, and "comprising" does not exclude other steps or elements.

## Claims

1. A tower structure (1) comprising
- a supporting tower portion (10); and
- a main tower portion (20) arranged over the supporting tower portion (10);
**characterized in that**
the supporting tower portion (10) has the form of a right cylinder and comprises at least one supporting tower section (11) assembled from a plurality of cylinder arc segments (110) arranged to meet at their vertical sides (112).

2. A tower structure according to claim 1, wherein the ratio of the height (H) of a supporting tower section (11) to the diameter (D) of that supporting tower section (11) is at most 1.0.

3. A tower structure according to claim 1 or claim 2, wherein the ratio of the height (H) of a supporting tower section (11) to the diameter (D) of that supporting tower section (11) is at least 0.5.

4. A tower structure according to any of the preceding claims, wherein an arc segment (110) of a supporting tower section (11) is not mechanically connected to an adjacent arc segment (110) of that supporting tower section (11).

5. A tower structure according to any of the preceding claims, wherein a cylinder arc segment (110) of a supporting tower section (11) is mechanically connected to an adjacent cylinder arc segment (110) of that supporting tower section (11) over at most 50%, more preferably at most 25%, most preferably at most 10% of the height (H) of that supporting tower section (11).

6. A tower structure according to claim 5, wherein adjacent cylinder arc segments (110) are connected by a plate (116) extending laterally from either side of a gap (G) between the adjacent cylinder arc segments (110) and mechanically secured to the cylinder arc segments (110).

7. A tower structure according to any of the preceding claims, wherein the supporting tower portion (10) comprises a stack of at least two supporting tower sections (11), and wherein a junction between cylinder arc segments (110) of a supporting tower section (11) is laterally offset from a junction between cylinder arc segments (110) of an upper and/or lower supporting tower section (11).

8. A tower structure according to any of the preceding claims, wherein the diameter (D) of the supporting tower portion (10) comprises at least 4.0 m, preferably at least 6.0 m, most preferably at least 8.0 m, and/or wherein the height (H) of a supporting tower section (11) comprises at least 4.0 m, preferably at least 6.0 m, most preferably at least 8.0 m.

9. A tower structure according to any of the preceding claims, comprising an annular adapter portion (40) arranged between the supporting tower portion (10) and the main tower portion (20), and wherein a lower diameter of the adapter portion (40) corresponds to the diameter (D) of the supporting tower portion (10), and wherein an upper diameter of the adapter portion (40) corresponds to a lower diameter (D₂₀) of the main tower portion (20).

10. A tower structure according to any of the preceding claims, wherein the tower structure (1) is a wind turbine tower (1).

11. The tower structure of claim 10, wherein the tower structure (1) has a height (H₁) of at least 100 m, and wherein the height (H₁₀) of the supporting tower portion (10) comprises at least 4% of the tower height (H₁); and/or wherein the diameter (D) of the supporting tower portion (10) comprises at least 4 m.

12. A method of constructing a tower structure (1) which method comprises
- providing a supporting tower portion (10) in the form of a right circular cylinder by assembling at least one supporting tower section (11) from a plurality of cylinder arc segments (110) arranged to meet at their vertical sides (112); and
- installing a main tower portion (20) on top of the supporting tower portion (10).

13. A method according to claim 12, comprising a step of applying a filler material (118) to fill a gap (G) between adjacent cylinder arc segments (110) of a supporting tower section (11).

14. A method according to claim 12 or claim 13, comprising the step of securing a lowermost supporting tower section (11) to a concrete plinth (30).

15. A method according to any of claims 12 to 14 comprising the step of forming a flange connection between adjacent tower sections (11).
